# FASCICULE DE BREVET EUROPEEN

(11) **EP 2 078 453 B1**
(45) Date de publication et mention de la délivrance du brevet: **19.01.2011**
(21) Numéro de dépôt: 08370023.7
(22) Date de dépôt: 27.11.2008
(51) Int. Cl.: A01G 9/12, A01G 9/16, A01G 13/02

(54) **Abri pour culture maraîchère**
Schutzbau für Handelsgärtnerei
Shelter for market gardening

(30) Priorité: 08.01.2008 FR 0800101
(43) Date de publication de la demande: 15.07.2009
(73) Titulaire: Patrick Delecroix, 59510 Hem (FR)
(72) Inventeur: Delecroix. Patrick, 59510 Hem (FR)
(74) Mandataire: Duthoit, Michel Georges André

(56) Documents cités:
- GB-A- 1 552 188
- GB-A- 1 570 783
- US-A- 5 479 744
- US-A1- 2002 059 749

## Description

L'invention concerne un abri pour culture maraîchère qui trouvera une application particulière, mais non limitative, pour la culture des tomates.

Dans le domaine de la culture maraîchère, il est connu de petites serres, plus ou moins élégantes, afin de protéger les plantations des intempéries. Ces abris permettent d'éviter la pulvérisation d'un traitement phytosanitaire, le traitement est généralement destiné à éviter que les plants ne soient contaminés par des champignons, par exemple, le mildiou dans le cas des tomates. Il est ainsi possible d'obtenir des fruits et légumes sans traitement.

Les serres connues consistent en un assemblage de tiges recouvert d'une toiture. Dans le cas de la culture de tomates, notamment, i! est nécessaire d'ajouter des tiges à l'intérieur de la serre afin de tuteuriser les plants.

Bien souvent, lors de la croissance des plants, le temps aidant, il est nécessaire de repiquer au sol les tuteurs, opération rendue toutefois difficile par exiguïté interne de la serre ainsi que par le souci de l'opérateur de ne pas désassembler la serre, voire la détériorer. En outre, de manière générale, ce type de serre s'intègre mal à l'esthétique d'un jardin d'agrément.

On connaît par exemple du document GB-1.552.188 un abri conforme au préambule de la revendication 1. Cet abri, sous forme de cloche est une construction autoporteuse résultant de l'assemblage de tiges tubulaires à l'aide de raccords emboîtables. Cette cloche forme une structure de toit qui peut être recouverte avec un film transparent et trouve une application dans la culture de légumes.

Le but de la présente invention est de pallier aux inconvénients précités en proposant un abri, de structure simplifiée, trouvant une application particulière pour protéger des plants nécessitant une tuteurisation.

Un autre but de l'invention est de proposer un abri de construction rapide et démontable.

Un autre but de l'invention est de proposer un abri dont la construction est montable et démontable, sans aucun outil.

Un autre but de l'invention est de proposer un abri extensible, notamment en longueur, en largeur ou en hauteur, sans limite.

Un autre but de l'invention est de proposer un abri dont la construction est réalisée essentiellement par des tiges et des raccords, et donc peu coûteux.

D'autres buts et avantages de la présente invention apparaîtront au cours de la description suivante qui n'est donnée qu'à titre indicatif et qui n'a pas pour but de la limiter.

L'invention concerne un abri pour culture maraîchère, notamment la culture des tomates, constitué par une pluralité de tuteurs érigés globalement verticalement et par une pluralité de traverses et de faîtières assujetties globalement horizontalement auxdits tuteurs pour constituer une structure de toit, lesdits tuteurs, traverses et faîtières coopérant pour constituer une construction autoporteuse.

L'invention sera mieux comprise à la lecture de la description suivante accompagnée de l'unique figure en annexe, illustrant, selon une vue en perspective, un abri conforme à l'invention selon un mode de réalisation.

L'invention concerne un abri pour culture maraîchère. Elle trouvera une application particulière, mais non exclusive pour la culture des tomates, et plus généralement pour tout plant nécessitant une tuteurisation.

Cet abri est constitué par une pluralité de tuteurs 3 érigés globalement verticalement et par une pluralité de traverses 4 et de faîtières repérées 5. Les traverses 4 et les faîtières 5 sont assujetties globalement horizontalement auxdits tuteurs 3 pour constituer une structure de toit.

Lesdits tuteurs 3, lesdites traverses 4 et lesdites faîtières 5 coopèrent pour constituer une construction autoporteuse.

Aussi, avantageusement, chaque tuteur 3 combine, non seulement une fonction pour tuteuriser un plant, notamment de tomates, mais également une fonction pour le support de la structure de toit.

Cela étant, les tuteurs faisant partie de la construction autoporteuse, il n'est pas nécessaire de les planter profondément dans le sol pour garantir leur stabilité verticale et éviter qu'ils ne se couchent, notamment sous le poids des plants qu'ils supportent.

Avantageusement, les tuteurs 3, les traverses 4 et les faîtières 5 peuvent être assujettis successivement entre eux à l'aide de raccords en T, notamment de type manchon. Ces éléments peuvent être ainsi montés rapidement par emboîtement.

Afin de permettre une extension en hauteur, en largeur, ou encore en longueur de l'abri, les tuteurs 3 et/ou les traverses 4 et/ou les faîtières 5 peuvent être constitués d'un assemblage de tiges maintenues entre elles à l'aide de raccords droits 7, notamment de type manchons.

Par exemple, la hauteur de l'abri peut être augmentée en ajoutant une tige au tuteur ou au contraire diminuée en retirant l'une des tiges. L'assemblage des tiges est rapide, simplement réalisé, notamment par emboîtement.

De la même façon, la largeur de l'abri peut être augmentée en ajoutant une tige aux traverses, ou au contraire diminuée en retirant une telle tige. La longueur de l'abri peut être augmentée, en ajoutant une traverse et ses tuteurs de support, notamment au nombre de deux et en augmentant la longueur des faîtières en y ajoutant une ou plusieurs tiges supplémentaires.

La structure de toit 2, globalement horizontale, peut être recouverte par un film PVC. La fixation du film PVC à la structure de toit peut être réalisée par tout moyen, et notamment par l'intermédiaire de clips de fixation venant pincer le film sur l'ossature de l'abri, notamment sur les faîtières et/ou les traverses.

Les tuteurs 3 peuvent être constitués par des tiges, notamment cylindriques, à surface non lisse, favorisant l'accrochage des plans de tomates. Tels qu'illustrés selon un exemple de réalisation non limitatif aux figures, les tuteurs peuvent présenter à leur surface des saillies, telles que des plots régulièrement espacés, notamment angulairement, et sur la longueur des tiges. Selon un autre exemple de réalisation, les tiges des tuteurs peuvent présenter un ou plusieurs sillons en hélicoïde sur leur longueur.

Afin de limiter les coûts de l'abri notamment, les tiges peuvent être du même type que celles des tuteurs pour l'ensemble de la construction, c'est-à-dire présentant le même aspect favorable à l'accrochage des plants, notamment de même diamètre et de même longueur. Il est ainsi possible de faire grandir les plants sous la toiture, accrochés à l'ossature de toit et notamment aux traverses. Afin de favoriser l'ancrage de l'abri au sol, les extrémités inférieures des tuteurs 3 peuvent être pointues. Les tiges basses des tuteurs 3 peuvent ainsi présenter une pointe.

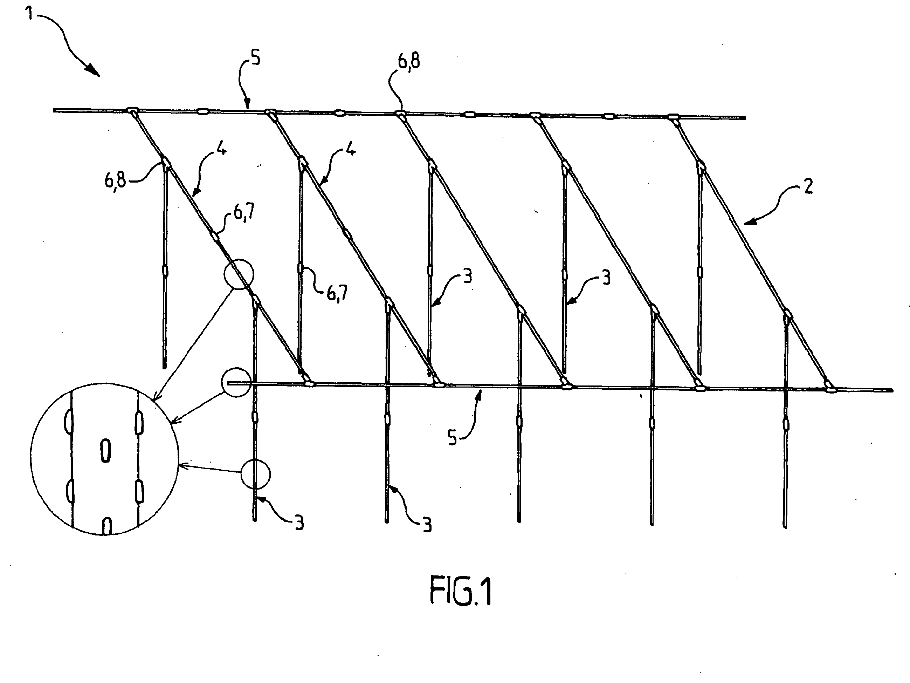

Nous décrivons maintenant en détail l'exemple de la figure 1. L'abri de la figure 1 est réalisé à partir de matériaux imputrescibles et en PVC traité anti UV. La structure de couleur verte s'intègre au décor naturel et est entièrement réalisée avec des tiges de 15 mm de diamètre et de 600 mm de longueur assemblées par des raccords 6 à savoir des raccords droits 7 et des raccords en T 8 de type manchon. Grâce aux raccords en T, l'abri est parfaitement contreventé, que ce soit dans une direction transversale ou longitudinale à l'abri.

La construction autoporteuse de l'abri est composée des raccords, de tuteurs, de traverses et de faîtières. Les tuteurs sont réalisées par une tige pointe et une tige normale reliées par un raccord droit. Les traverses sont réalisées avec deux tiges assemblées entre elles par un raccord droit. Les faîtières, comme les traverses, sont réalisées avec des tiges normales reliées successivement par des raccords droits et des raccords en T. L'ensemble des tiges sont du même type, à surface non lisse, pourvue de saillies ou ergots répartis régulièrement sur toute la longueur des tiges. Un film en PVC peut être fixé à l'ossature de toit, notamment à l'aide de clips venant pincer le film sur l'ossature, au niveau des traverses et/ou des faitières.

Naturellement, d'autres modes de mise en oeuvre, à la portée de l'homme de l'art, auraient pu encore être envisagés, sans pour autant sortir du cadre de l'invention définie par les revendications ci-après.

## Revendications

1. Abri (1) pour culture maraîchère, notamment la culture des tomates, constitué par une pluralité de tuteurs (3) érigés globalement verticalement et par une pluralité de traverses (4) et de faîtières (5) **caractérisé en ce que** les tuteurs (3) sont assujetties à la pluralité de traverses (4) et de faîtières (5) positionnés globalement horizontalement auxdits tuteurs en constituant une structure de toit 2), lesdits tuteurs (3), traverses (4) et faîtières (5) coopérant en constituant une construction autoporteuse.

2. Abri selon la revendication 1, dans lequel lesdits tuteurs (3), traverses (4) et faîtières (5) sont assujettis successivement entre eux à l'aide de raccords en T (8).

3. Abri selon la revendication 1 ou 2, dans lequel lesdits tuteurs (3), et/ou traverses (4), et/ou encore faîtières (5), sont constituée d'un assemblage de tiges maintenues entre elles à l'aide de raccords droits (7).

4. Abri selon l'une des revendications 1 à 3, dans lequel la structure de toit (2) est recouverte par un film PVC.

5. Abri selon la revendication 4, dans lequel des clips assurent la fixation dudit film PVC à ladite structure de toit.

6. Abri selon l'une des revendications 1 à 5, dans lequel les extrémités inférieures desdits tuteurs (3) sont pointues.

7. Abri selon l'une des revendications 1 à 6, dans lequel les tuteurs (3) sont constitués par des tiges à surface non lisse.

8. Abri selon la revendication 7, dans lequel les tiges des tuteurs présentent à leurs surfaces des saillies régulièrement espacées.

9. Abri à tomates selon la revendication 7 ou 8, dans lequel les tiges de la de ladite structure de toit (2) et les tiges desdits tuteurs (3) sont du même type.

## Claims

1. A shelter (1) for vegetable farming, in particular tomato farming, consisting of a plurality of globally vertically erected stakes (3) and of a plurality of crosspieces (4) and skylights (5); **characterised in that** the stakes (3) are subjected to the plurality of crosspieces (4) and skylights which are positioned globally horizontally to said stakes by forming a roof structure (2), whereas said stakes (3), crosspieces (4) and skylights (5) cooperate by forming a self-bearing construction.

2. A shelter according to claim 1, wherein said stakes (3), crosspieces (4) and skylights (5) are successively subjected to one another using T-fittings (8).

3. A shelter according to claim 1 or 2, wherein said stakes (3) and/or crosspieces (4) and/or skylights (5) consist of an assembly of rods held together using straight fittings (7).

4. A shelter according to any of the claims 1 to 5, wherein the roof structure (2) is covered with a PVC film.

5. A shelter according to claim 4, wherein clips fasten said PVC film to said roof structure.

6. A shelter according to any of the claims 1 to 5, wherein the lower ends of said stakes (3) are spiked.

7. A shelter according to any of the claims 1 to 6, wherein the stakes (3) consist of rods with non-smooth surface.

8. A shelter according to claim 7, wherein the rods of the stakes have surfaces with regularly spaced-apart protrusions.

9. A tomato shelter according to claim 7 or 8, wherein the rods of said roof structure (2) and the rods of said stakes (3) are of the same type.

## Patentansprüche

1. Gewächshaus (1) für Gemüsebau, nämlich Tomatenbau, bestehend aus einer Vielheit von insgesamt senkrecht aufgerichteten Stützstangen (3) und einer Vielheit von Querträgern (4) und Tragstangen (5), **dadurch gekennzeichnet, dass** die Stützstangen (3) an der Vielheit von Querträgern (4) und Tragstangen (5) befestigt sind und insgesamt waagerecht an den besagten Stützstangen positioniert sind, wobei sie eine Dachstruktur (2) bilden, wobei die besagten Stützstangen (3), Querträger (4) und Tragstangen (5) mit einander zusammenwirken, wobei sie eine selbsttragende Konstruktion bilden.

2. Gewächshaus nach Anspruch 1, bei dem die besagten Stützstangen (3), Querträger (4) und Tragstangen (5) auf einander folgend mittels T-Verbindungsstücke (5) an einander befestigt sind.

3. Gewächshaus nach Anspruch 1 oder 2, bei dem die besagten Stützstangen (3) und/oder Querträger (4) und/oder Tragstangen (5) aus einer Zusammenfügung von mittels gerader Verbindungsstücke (7) zusammengehaltenen Stangen bestehen.

4. Gewächshaus nach einem der Ansprüche 1 bis 3, bei dem die Dachstruktur (2) mit einer PVC-Folie überdeckt ist.

5. Gewächshaus nach Anspruch 4, bei dem Klammern die Befestigung der besagten PVC-Folie an der besagten Dachstruktur sichern.

6. Gewächshaus nach einem der Ansprüche 1 bis 5, bei dem die unteren Enden der besagten Stützstangen (3) spitz sind.

7. Gewächshaus nach einem der Ansprüche 1 bis 6, bei dem die Stützstangen (3) aus Stangen mit nicht-glatter Oberfläche bestehen.

8. Gewächshaus nach Anspruch 7, bei dem die Stangen der Stützstangen an ihren Oberflächen regelmässig beabstandeten Vorsprünge aufweisen.

9. Gewächshaus nach Anspruch 7 oder 8, bei dem die Stangen der Dachstruktur (2) und die Stangen der besagten Stützstangen (3) der gleichen Art sind.
